# EUROPÄISCHE PATENTANMELDUNG

(11) **EP 2 607 418 A1**
(43) Veröffentlichungstag der Anmeldung: **26.06.2013**
(21) Anmeldenummer: 11194964.0
(22) Anmeldetag: 21.12.2011
(51) Int. Cl.: C08K 5/098, C08K 5/10, C08K 5/20, B29C 45/40

(54) **Entformungsmittelkombinationen**

(71) Anmelder: LANXESS Deutschland GmbH, 51369 Leverkusen (DE)
(72) Erfinder: Benighaus, Tobias, 40215 Düsseldorf (DE); Joachimi, Detlev, 47800 Krefeld (DE); Weider, Richard, 51381 Leverkusen (DE)

(57) **Zusammenfassung**

Die vorliegende Erfindung betrifft Entformungsmittelkombinationen für thermoplastische Kunststoffe enthaltend a) mindestens ein Amidwachs und b) mindestens ein Esterwachs und/oder mindestens ein verseiftes Wachs sowie die Verwendung der Entformungsmittelkombinationen für thermoplastische Kunststoffe sowie thermoplastische Formmassen enthaltend diese Entformungsmittelkombinationen und Verfahren zu ihrer Herstellung.

## Beschreibung

Die vorliegende Erfindung liegt auf dem Gebiet der thermoplastischen Kunststoffe und betrifft Entformungsmittelkombinationen zu deren Verarbeitung. Die Entformungsmittelkombinationen enthalten mindestens ein Amidwachs und mindestens ein Esterwachs und/oder ein verseiftes Wachs. Zudem betrifft die Erfindung die Verwendung dieser Entformungsmittelkombinationen für thermoplastische Kunststoffe, thermoplastische Formmassen enthaltend diese Entformungsmittelkombinationen, Verfahren zur Herstellung dieser thermoplastischen Formmassen sowie Formteile und Halbzeuge bestehend aus diesen thermoplastischen Formmassen.

Der Spritzguss ist eines der üblichen Verfahren zur Herstellung von Formteilen aus thermoplastischen Kunststoffen. Bei diesem Verfahren muss das gespritzte Formteil abschließend aus dem Formwerkzeug entfernt bzw. entnommen werden. Aufgrund starker Adhäsionskräfte zwischen der abgeschreckten Polymerschmelze und der Werkzeugwand ist dieser Schritt häufig mit hohen Entformungskräften verbunden. Um eine Verformung des Formteils zu vermeiden, muss mit der Entformung gewartet werden bis das Formteil durch den Abkühlungsprozess eine ausreichende Steifigkeit erlangt hat. Daher können starke Adhäsionskräfte zwischen Werkzeugwand und Formteil die Zykluszeit signifikant verlängern und die Produktionskosten des Formteils erhöhen.

Stand der Technik ist die Zugabe von Entformungsmitteln zu thermoplastischen Kunststoffen oder/und das Einsprühen der Spritzgussformen mit geeigneten Formtrennmitteln. Die Entformungsmittel reduzieren die für die Entformung notwendigen Kräfte. Es wird angenommen, dass die Entformungsmittel in der Grenzfläche zwischen Formteil und Werkzeugwand oberflächenaktiv wirken und so die Adhäsionskräfte reduzieren. Entformungsmittel mit dieser Wirkung werden auch als Formtrennmittel oder äußere Gleitmittel bezeichnet.

Neben dieser Wirkung als äußere Gleitmittel zeigen Entformungsmittel meist zudem eine Wirkung als innere Gleitmittel und erhöhen oft die Fließfähigkeit der Schmelze. Dies erleichtert die Füllung des Formwerkzeugs, erlaubt die Füllung des Formwerkzeugs unter milderen Verarbeitungsbedingungen und reduziert die Wahrscheinlichkeit lokaler Überhitzungen durch überhöhte Scherbeanspruchung der Schmelze.

In thermoplastischen Kunststoffen, besonders in technischen Thermoplasten, insbesondere beim Einsatz von Polyamid, werden üblicherweise langkettige Carbonsäuren sowie deren Seifen, Ester oder Amide als Entformungsmittel eingesetzt, mitunter auch polare oder unpolare Polyethylenwachse. Dabei zeigt jedes dieser Entformungsmittel in jedem Thermoplasten unterschiedliche spezifische Vor- und Nachteile.

In technischen Thermoplasten, wie beispielsweise Polyamid und Polyester, gehen langkettige Carbonsäuren und deren Seifen bei den hohen Temperaturen, die im Spritzguss-Verfahren notwendig sind, ungewünschte Umamidierungs- oder Umesterungsreaktionen mit den Polymerketten ein. Diese Reaktionen führen zu einer Reduktion der Länge der Polymerketten, welche sich negativ auf die mechanischen Eigenschaften des Formteils auswirkt. Dafür zeigen diese Entformungsmittel eine gute Wirkung als innere wie äußere Gleitmittel.

Ester und Amide langkettiger Carbonsäuren zeigen auch bei hohen Temperaturen nur selten ungewollte Nebenreaktionen in der Schmelze und führen daher nicht zu einem Kettenabbau. Diese Substanzen weisen jedoch eine gute Verträglichkeit mit technischen Thermoplasten auf, migrieren nur in geringem Maße an deren Oberfläche und zeigen daher auch nur eine geringere Wirksamkeit als Entformungsmittel.

Polyethylenwachse zeigen oft keine ausreichende Wirkung als Entformungsmittel und können außerdem zur Bildung von sichtbaren Belägen auf der Oberfläche des Formteils führen.

Die Aufgabe der vorliegenden Erfindung war es daher, ein Entformungsmittel zu finden, das die Adhäsionskräfte zwischen Formteil und Werkzeugwand gegenüber bisher üblichen Entformungsmitteln reduziert und keinen oder nur einen geringen Abbau der Kettenlänge des Thermoplasten während der Verarbeitung bewirkt.

Diese Aufgabe konnte gelöst werden durch eine Entformungsmittelkombination unterschiedlicher Entformungsmittel, die A. mindestens ein Amidwachs sowie B. mindestens ein Esterwachs und/oder C. mindestens ein verseiftes Wachs enthalten.

In einer bevorzugten Ausführungsform betrifft die vorliegende Erfindung Entformungsmittelkombinationen, dadurch gekennzeichnet, dass diese mindestens ein Amidwachs, mindestens ein Esterwachs und mindestens ein verseiftes Wachs enthalten.

Amidwachse im Sinne der vorliegenden Erfindung sind Verbindungen, die mittels einer Kondensationsreaktion von langkettigen Carbonsäuren mit mono- oder polyfunktionalen Aminen hergestellt werden können. In einer bevorzugten Ausführungsform kommen auch Carbonsäuren mit Hydroxyl-Gruppen in Betracht.

Erfindungsgemäß bevorzugt sind verzweigte oder lineare langkettige Carbonsäuren mit mehr als 11 Kohlenstoffatomen. Besonders bevorzugt liegt die Kettenlänge der Carbonsäuren bei 12 bis 36 Kohlenstoffatomen. Ganz besonders bevorzugt sind Carbonsäuren, deren Kettenlänge bei 14 bis 22 Kohlenstoffatomen liegt. Insbesondere bevorzugt sind lineare gesättigte Carbonsäuren mit einer Kettenlänge von 14 bis 22 Kohlenstoffatomen. Insbesondere besonders bevorzugt ist der Einsatz wenigstens einer Carbonsäure der Reihe Laurinsäure, Isotridecansäure, Myristinsäure, Palmitinsäure, Margarinsäure, Stearinsäure, Isostearinsäure, Arachinsäure, Behensäure, Lignocerinsäure, Cerotinsäure, Montansäure, Melissinsäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Nervonsäure, Linolsäure, Linolensäure, Calendulasäure, Elaeostearinsäure, Punicinsäure, Arachidonsäure, Timmodonsäure, Clupanodonsäure, Cervonsäure sowie deren technische Mischungen Insbesondere ganz besonders bevorzugt ist der Einsatz wenigstens einer Carbonsäure der Reihe Margarinsäure, Stearinsäure, Arachinsäure und Behensäure, insbesondere Stearinsäure.

Die Carbonsäuren können alleine oder in Mischung eingesetzt werden. Bevorzugt werden technische Carbonsäuren eingesetzt, die normalerweise als Mischung von Carbonsäuren mit unterschiedlicher Kettenlänge vorliegen, wobei eine Kettenlänge dominiert. Besonders bevorzugt wird technische Stearinsäure eingesetzt, die hauptsächlich Stearinsäure enthält sowie in geringeren Mengen Palimitinsäure und andere Carbonsäuren.

Als Aminkomponente kommen Alkylamine mit einer oder mehr Amingruppen in Frage, wobei die Amingruppen primärer oder sekundärer Natur sein können und die Alkylkomponente gesättigt oder ungesättigt sein kann und weitere Substituenten enthalten kann. Bevorzugt finden Alkylamine mit endständigen primären Amingruppen Verwendung, besonders bevorzugt sind lineare gesättigte Alkylamine mit zwei endständigen primären Amingruppen. Ganz besonders bevorzugt ist Ethylendiamin.

Insbesondere besonders bevorzugt wird als Amidwachs Ethylenbisstearamid eingesetzt. Insbesondere ganz besonders bevorzugt wird Ethylenbisstearamid, hergestellt aus technischer Stearinsäure, eingesetzt, die eine Mischung der reinen Stearinsäure mit weiteren Carbonsäuren, hauptsächlich Palmitinsäure, ist.

Esterwachse im Sinne der vorliegenden Erfindung sind Verbindungen, die mittels einer Kondensationsreaktion mindestens einer langkettigen Carbonsäure mit einem Alkohol hergestellt werden können.

Erfindungsgemäß bevorzugte Esterwachse sind Ester der bereits oben beschriebenen Carbonsäuren.

Für die Alkoholkomponente des Esterwachses werden bevorzugt ungesättige oder gesättige Alkylverbindungen mit mindestens einer Hydroxyl-Gruppe eingesetzt, wobei die Hydroxyl-Gruppen primär, sekundär oder tertiär sein können. Besonders bevorzugt werden gesättigte Alkylverbindungen mit 1 bis 8 primären oder sekundären Hydroxyl-Gruppen eingesetzt. Ganz besonders bevorzugt werden lineare gesättigte Alkylverbindungen mit 1 bis 4 primären oder sekundären Hydroxyl-Gruppen eingesetzt.

Insbesondere bevorzugt wird wenigstens ein Alkohol der Reihe Erythrit, Pentaerythrit, DiPentaerythrit, Tri-Pentaerythrit, Trimethylolpropan, Glyzerin, Di-Glyzerin, Tri-Glyzerin, Xylit, Mannit, Sorbit, Ethylenglykol, 1,3-Propylenglykol, 1,4-Butandiol, 2,3-Butandiol, 1,5-Pentandiol, 1,6-Hexandiol, Laurylalkohol, Isotridecylalkohol, Myristylalkohol, Palmitylalkohol, Daturylalkohol, Stearylalkohol, Isostearylalkohol, Arachylalkohol, Behenylalkohol, Lignocerylalkohol, Cerotylalkohol, Montanylalkohol sowie deren technische Mischungen eingesetzt.

Verseifte Wachse im Sinne der vorliegenden Erfindung sind Verbindungen eines Kations und mindestens eines Anions einer langkettigen Carbonsäure, wobei das Anion durch Deprotonierung der Carbonsäure erhalten wird.

Auch teilverseifte Wachse werden im Sinne der Erfindung als verseifte Wachse betrachtet. Teilverseifte Wachse sind Mischungen neutraler Carbonsäuren mit den oben beschriebenen Salzen aus Carbonsäure-Anionen und Kationen.

Für die Herstellung der verseiften Wachse werden bevorzugt langkettige Carbonsäuren wie sie bereits oben beschrieben wurden eingesetzt.

Als Kation kommen bevorzugt solche Kationen in Frage, die sich von den Elementen der Gruppe umfassend alle Alkali- und Erdalkalimetalle sowie Zink und Aluminium herleiten und die üblicherweise in den formalen Oxidationszuständen +1, +2 oder +3 vorliegen. Daher bestehen die verseiften Wachse bevorzugt aus einem dieser Kationen sowie jeweils 1, 2 oder 3 Carbonsäure-Anionen entsprechend den Oxidationszuständen des Kations, so dass die Verbindung keine elektrische Gesamtladung aufweist. Besonders bevorzugt finden die Kationen der Elemente aus der Gruppe umfassend Lithium, Natrium, Kalium, Magnesium, Calcium, Barium, Aluminium und Zink Anwendung.

Als verseifte Wachse werden insbesondere bevorzugt Lithium-Stearat, Natrium-Stearat, Kalium-Stearat, Magnesium-Stearat, Calcium-Stearat, Barium-Stearat, Aluminium-Stearat oder Zink-Stearat, insbesondere ganz besonders bevorzugt Calcium-Stearat, eingesetzt.

Die Komponenten können in jedem beliebigen Verhältnis in den erfindungsgemäßen Entformungsmittelkombinationen vorliegen. Bevorzugt sind Entformungsmittelkombinationen, die
A. 10 bis 90 Gew.-%, besonders bevorzugt 20 bis 70 Gew.-%, ganz besonders bevorzugt 30 bis 50 Gew.-% mindestens eines Amidwachses,
B. 10 bis 90 Gew.-%, besonders bevorzugt 20 bis 60 Gew.-%, ganz besonders bevorzugt 30 bis 50 Gew.-% mindestens eines Esterwachses enthalten.

Im Falle des Einsatzes eines verseiften Wachses werden entweder zusätzlich zu den Komponenten A. und B. oder anstelle der Komponente B. noch C. 5 bis 50 Gew.-%, besonders bevorzugt 10 bis 40 Gew.-%, ganz besonders bevorzugt 15 bis 35 Gew.-% mindestens eines verseiften Wachses eingesetzt.

Die Erfindung betrifft deshalb Entformungsmittelkombinationen dadurch gekennzeichnet, dass diese
A. 5 - 70 Gew.-%, bevorzugt 20 - 70 Gew.-%, besonders bevorzugt 30 - 50 Gew.-% mindestens eines Amidwachses,
B. 5 - 70 Gew.-%, bevorzugt 20 - 60 Gew.-%, besonders bevorzugt, 30 - 50 Gew.-% mindestens eines Esterwachses, und/oder
C. 5 - 50 Gew.-%, bevorzugt 10 - 40 Gew.-%, besonders bevorzugt 15 - 35 Gew.-% mindestens eines verseiften Wachses enthalten.

Die erfindungsgemäßen Entformungsmittelkombinationen können neben den Komponenten Amidwachse, Esterwachse und/oder verseifte Wachse beliebige weitere Inhaltsstoffe haben. Bevorzugt werden diese Inhaltsstoffe üblicherweise als Entformungsmittel für Kunststoffe eingesetzt. Bevorzugte zusätzliche Entformungsmittel der Komponente D. sind polare und unpolare Polyethylenwachse, alpha-Olefine, Fettsäuren oder Fettsäurealkohole.

Bevorzugt als Entformungsmittel einzusetzende Fettsäuren sind Laurinsäure, Isotridecansäure, Myristinsäure, Palmitinsäure, Margarinsäure, Stearinsäure, Isostearinsäure, Arachinsäure, Behensäure, Lignocerinsäure, Cerotinsäure, Montansäure oder Melissinsäure.

Bevorzugt als Entformungsmittel einzusetzende Fettsäurealkohole sind Laurylalkohol, Isotridecylalkohol, Myristylalkohol, Palmitylalkohol, Daturylalkohol, Stearylalkohol, Isostearylalkohol, Arachylalkohol, Behenylalkohol, Lignocerylalkohol, Cerotylalkohol, Montanylalkohol.

Bevorzugt als Entformungsmittel einzusetzende unpolare Polyethylenwachse werden durch Polymerisation von Ethylen oder Degradation von Polyethylen hergestellt. Bei der Polymerisation können neben Ethylen auch andere Co-Monomere eingesetzt werden. Bevorzugte Co-Monomere weisen 2 bis 10 Kohlenstoffatome und mindestens eine Doppelbindung zwischen zwei Kohlenstoffatomen auf. Besonders bevorzugte Co-Monomere sind Propen, Buten, Butadien, Penten, Pentadien, Hexen und Hexadien.

Bevorzugte polare Polyethylenwachse werden durch Oxidation unpolarer Polyethylenwachse, durch Polymerisation von Ethylen mit polaren Co-Monomeren oder Pfropfung polarer ungesättigter Monomere an Polyethylen hergestellt. Bevorzugte Co-Monomere weisen 2 bis 10 Kohlenstoffatome und mindestens eine Doppelbindung zwischen zwei Kohlenstoffatomen sowie eine polare Gruppe auf. Besonders bevorzugte Co-Monomere sind Acrylsäure, Acrylsäureester, Methacrylsäureester und Vinylacetat. Ein besonders bevorzugtes polares Polyethylenwachs ist Licolub H12 von Clariant GmbH.

Bevorzugt als Entformungsmittel einzusetzende alpha-Olefine sind linear oder verzweigt und haben eine Kettenlänge von mindestens 12 Kohlenstoffatomen, besonders bevorzugt von mindestens 18 Kohlenstoffatomen.

Bevorzugt sind Entformungsmittelkombinationen, bei denen der Anteil anderer Komponenten als Amidwachse, Esterwachse oder verseifte Wachse kleiner 25 Gew.-%, besonders bevorzugt kleiner 10 Gew.-% ist. Ganz besonders bevorzugt sind Entformungsmittelkombinationen, die ausschließlich Amidwachse, Esterwachse und/oder verseifte Wachse enthalten.

In einer bevorzugten Ausführungsform betrifft die vorliegende Erfindung Entformungsmittelkombinationen unterschiedlicher Entformungsmittel, die mindestens A. ein Amidwachs sowie B. ein Esterwachs und/oder C. ein verseiftes Wachs enthalten worin als Amidwachs Ethylenbisstearylamid, als Esterwachs Glycerintristearat oder Stearylstearat und als verseiftes Wachs Calciumstearat eingesetzt wird.

Die vorliegende Erfindung betrifft deshalb auch die Verwendung solcher Entformungsmittelkombinationen zum Entformen von thermoplastischen Kunststoffen, bevorzugt von Polyamiden und Polyestern, besonders bevorzugt von Polyamid-basierten oder Copolyamid-basierten Formmassen, ganz besonders bevorzugt von Polyamid 6- oder Polyamid 66- oder Co-Polyamid-basierten Formmassen.

Ein weiterer Gegenstand der vorliegenden Erfindung ist ein Verfahren zur Herstellung thermoplastischer Formmassen beinhaltend die erfindungsgemäßen Entformungsmittelkombinationen.

Für das erfindungsgemäße Verfahren werden bevorzugt bereits in Polymerform vorliegende Thermoplasten eingesetzt. Vorzugsweise geschieht das Mischen (Compoundieren) der Komponenten der thermoplastischen Formmasse bei 220 bis 360 °C durch gemeinsames Vermengen, Vermischen, Kneten, Compoundieren, Extrudieren oder Verwalzen des Thermoplasten mit der erfindungsgemäßen Entformungsmittelkombination, besonders bevorzugt durch Compoundieren auf einem gleichläufigen Zweiwellenextruder oder einem Buss-Kneter. Es kann vorteilhaft sein, ausgewählte oder sämtliche Komponenten vorzumischen.

Bevorzugt werden die individuellen Entformungsmittel A., B. und/oder C. sowie in einer weiteren Ausführungsform noch D. in ihrer jeweiligen Darreichungsform zuerst gemischt und als Entformungsmittelkombination dem Thermoplasten zugegeben. Die Homogenisierung der Entformungsmittelkombination ist nur soweit notwendig, dass die Entformungsmittel nach der Herstellung der thermoplastischen Formmassen gleichmäßig in dieser verteilt sind. Eine gleichmäßige Verteilung der Entformungsmittel in der thermoplastischen Formmasse kann auch erreicht werden, indem die einzelnen Entformungsmittel separat dem jeweiligen Thermoplasten zugegeben werden. Daher sind auch derartige Verfahren Gegenstand der vorliegenden Erfindung. Besonders bevorzugt wird ein Verfahren, in dem die Komponenten der Entformungsmittelkombination gemischt und konfektioniert und anschließend die Entformungsmittelkombination dem Thermoplasten zugegeben wird. Ganz besonders bevorzugt wird ein Verfahren, in dem
1. die Komponenten der Entformungsmittelkombination aufgeschmolzen,
2. im geschmolzenen Zustand durchmischt,
3. bis zur Erstarrung abgekühlt,
4. konfektioniert, und
5. dem Thermoplasten zugegeben werden.

Bevorzugt werden die Schritte 1 bis 4 dieses Verfahrens in einem gleichläufigen Zweiwellenextruder oder Buss-Kneter durchgeführt. Besonders bevorzugt geschieht dies bei einer Temperatur im Extruder oder Kneter, die oberhalb des Schmelzpunktes derjenigen Komponente der Entformungsmittelkombination mit dem höchsten Schmelzpunkt liegt.

Als Konfektionierung wird im Sinne dieser Erfindung jeder Prozess verstanden, der die Mischung der Entformungsmittel in eine Darreichungsform überführt, die zu einer einfachen Verarbeitung bei der Herstellung der thermoplastischen Formmassen führt. Bevorzugt sind solche Darreichungsformen, die nur einen geringen Anteil an feinteiligen Partikeln aufweisen oder beim Transport, bei der Förderung, Dosierung oder sonstigen Verarbeitung ausbilden. Als feinteilige Partikel werden hier Partikel betrachtet, die entlang einer Raumrichtung eine Länge unterhalb von 500 µm, bevorzugt unterhalb von 200 µm, besonders bevorzugt unterhalb von 100 µm aufweisen. Als geringen Anteil wird ein Anteil von weniger als 10 Gew.-%, bevorzugt weniger als 5 Gew.-%, besonders bevorzugt weniger als 2 Gew.-% angesehen. Bevorzugte Prozesse sind das Kompaktieren von Pulvern mit oder ohne zusätzliche Bindemittel, das Granulieren eines Schmelzestrangs, das Abtropfen einer Schmelze zur Darstellung von Prills oder das Zerschlagen einer erstarrten Schmelze zu Schuppen (flakes).

Die vorliegende Erfindung betrifft deshalb ein Verfahren zur Herstellung von Entformungsmittelkombinationen beinhaltenden thermoplastischen Kunststoffen beinhaltend die Verfahrensschritte:
a) Mischen von mindestens zwei Entformungsmitteln A. und B. und/oder C. zu einer Entformungsmittelkombination und
b) Zugabe der Entformungsmittelkombination zu den thermoplastischen Kunststoffen.

Die erfindungsgemäß herzustellenden Formmassen können nach Verfahren, die dem Fachmann bekannt sind, insbesondere durch Extrudieren, Blasformen oder Spritzgießen, verarbeitet werden. Es kann weiterhin vorteilhaft sein, Formteile oder Halbzeuge aus einer bei Raumtemperatur, bevorzugt 0 bis 40 °C, hergestellten physikalischen Mischung (Dryblend) vorgemischter Komponenten und/oder einzelner Komponenten direkt herzustellen.

Der Thermoplast kann jedes thermoplastische Polymer sein. Bevorzugt handelt es sich dabei um amorphe Polymere, thermoplastische Elastomere oder semi-kristalline Polymere. Besonders bevorzugt wird die erfindungsgemäße Entformungsmittelkombination bei Polymeren angewandt, die in technischen Anwendungen zum Einsatz kommen, ganz besonders bevorzugt bei semi-kristallinen Thermoplasten mit einem Schmelzpunkt von mindestens 180 °C oder amorphen Thermoplasten mit einer Glasübergangstemperatur von mindestens 150°C.

Bevorzugte amorphe Polymere für den Einsatz der erfindungsgemäßen Entformungsmittelkombination sind amorphe Polyamide, Polyimide, Polyetherimide, Polycarbonate, Polysulfone oder Polyarylate.

Bevorzugte semi-kristalline Polymere für den Einsatz der erfindungsgemäßen Entformungsmittelkombination sind Polyphenylensulfide, Polyester, Polyetherketone und semi-kristalline Polyamide.

Insbesondere bevorzugt sind Polyamide, insbesondere ganz besonders bevorzugt Polyamid 6 oder Polyamid 66 oder Co-Polyamide auf der Basis von Polyamid 6 und/oder Polyamid 66, oder Blends dieser Polyamide mit weiteren thermoplastischen Polymeren, insbesondere der Reihe Polyphenylenoxid, Polyethylen oder Polypropylen.

In einer bevorzugten Ausführungsform kann der Thermoplast auch ein Blend unterschiedlicher thermoplastischer Polymere sein.

Ein weiterer Gegenstand der vorliegenden Erfindung ist die Verwendung erfindungsgemäßer Entformungsmittelkombinationen für thermoplastische Kunststoffe und daraus herzustellender Formteile und Halbzeuge. Die Entformungsmittelkombinationen finden bevorzugt als Entformungsmittel Verwendung, können aber auch als innere Gleitmittel zur Verbesserung der Fließfähigkeit der Polymerschmelze eingesetzt werden. Sie können auch verwendet werden, um andere Inhaltsstoffe, die dem Thermoplasten zugegeben werden, in eine andere Darreichungsform zu überführen. In einer bevorzugten Ausführungsform können die Entformungsmittelkombinationen als Bindemittel für die Kompaktierung von Pulvern oder als Träger eines Masterbatches eingesetzt werden

Ein weiterer Gegenstand der vorliegenden Erfindung sind thermoplastische Formmassen enthaltend die erfindungsgemäßen Entformungsmittelkombinationen. Als Thermoplasten eignen sich die bereits oben beschriebenen Thermoplasten. In einer bevorzugten Ausführungsform enthalten die thermoplastischen Formmassen neben der Entformungsmittelkombination und dem Thermoplasten Füll- oder Verstärkungsstoffe und/oder weitere Additive.

Erfindungsgemäß bevorzugt einzusetzende Füll- und Verstärkungsstoffe sind mineralische Füllstoffe, insbesondere Calcium-Carbonat, Wollastonit, Phlogopit, Muskovit, Kaolin, Talkum, CalciumSulfat, Barium-Sulfat sowie Glasfasern, Carbonfasern, Aramidfasern, Kohlenstoffnanoröhren, Glaskugeln oder Hohlglaskugeln.

Erfindungsgemäß einzusetzende weitere Additive sind bevorzugt Thermostabilisatoren, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähigkeitsmodifikatoren, Gleitmittel, Farbstoffe oder Pigmente. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden. Die Additive können alleine oder in Mischung bzw. in Form von Masterbatchen eingesetzt werden.

Erfindungsgemäß bevorzugt als Additiv einzusetzende Thermostabilisatoren in PolyamidFormmassen sind Kupferverbindungen, insbesondere Kupferhalogenide in Kombination mit Alkalimetallhalogeniden, sterisch gehinderte Phenole und/oder Phosphite, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen.

Erfindungsgemäß bevorzugt als Additiv einzusetzende UV-Stabilisatoren sind substituierte Resorcine, Salicylate, Benzotriazole oder Benzophenone.

Im Falle erfindungsgemäß bevorzugt einzusetzender Schlagzähmodifikatoren oder Elastomer-Modifikatoren handelt es sich ganz allgemein um Copolymerisate, die bevorzugt aus mindestens zwei Monomeren der Reihe Ethylen, Propylen, Butadien, Isobuten, Isopren, Chloropren, Vinylacetat, Styrol, Acrylnitril und Acryl- bzw. Methacrylsäureester mit 1 bis 18 Kohlenstoffatomen in der Alkoholkomponente aufgebaut sind. In einer bevorzugten Ausführungsform enthalten die Copolymerisate kompatibilisierende Gruppen, bevorzugt Maleinsäureanhydrid oder Epoxid.

Erfindungsgemäß als Additiv bevorzugt einzusetzende Farbstoffe oder Pigmente sind anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone sowie andere Farbmittel.

Erfindungsgemäß als Additiv bevorzugt einzusetzende Nukleierungsmittel sind Natrium- oder Calciumphenylphosphinat, Aluminiumoxid oder Siliziumdioxid oder Talkum, besonders bevorzugt Talkum.

### Beispiele

Zum Nachweis der erfindungsgemäß beschriebenen Verbesserungen wurden zunächst durch Compoundierung entsprechende Kunststoff-Formmassen angefertigt.

Die einzelnen Komponenten wurden in einem Zweiwellenextruder des Typs ZSK 32 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde zwei Tage bei 70 °C im Vakuumtrockenschrank getrocknet.

Die in den folgenden zwei Tabellen dargestellten Zusammensetzungen wurden alle nach der oben beschriebenen Weise verarbeitet.

Zur Bestimmung der Entformungswirkung wurden Haft- und Gleitreibungskoeffizienten (Tabellen 3 und 4) sowie die Entformungskräfte an einem Bauteil (Tabellen 1 und 2) für erfindungsgemäße und nicht-erfindungsgemäße Entformungsmittelkombinationen gemessen.

Die Entformungskräfte wurden bestimmt, indem ein rechteckiges Formteil mit Verstärkungsrippen im Spritzguss-Verfahren hergestellt und die für die Entformung notwendigen Kräfte am Auswerfer aufgezeichnet wurden. Die thermoplastischen Formmassen wurden mit einer Massetemperatur von 280 °C (an der Düse) in die Form gespritzt. Die Form wurde auf eine Temperatur von 80 °C temperiert. Nach einer Nachdruckzeit von 8 Sekunden bei einem Nachdruck von 350 bar wurde das Formteil 20 Sekunden abgekühlt und anschließend entformt. Bei der Entformung kamen 12 Entformungsstifte zum Einsatz, die über eine Metallplatte gemeinsam pneumatisch bewegt wurden. Die Kräfte, die notwendig waren, um die 12 Entformungsstifte gegen das Formteil zu drücken und so das Formteil zu entformen, wurden elektronisch über einen Kraftsensor aufgezeichnet. Die höchste auftretende Kraft wurde als Entformungskraft betrachtet.

Die Fließgeschwindigkeit der Schmelze hängt neben anderen Faktoren von der Polymerkettenlänge ab. Die Veränderung der durchschnittlichen Polymerkettenlänge bei thermischer Belastung wurde daher über die Veränderung der Volumen-Fließrate (melt volume rate, MVR) nach thermischen Belastungen unterschiedlicher Dauer bestimmt. Polyamid-Polymerketten können bei hohen Temperaturen und bei Anwesenheit von Wasser-Molekülen Abbaureaktionen durchlaufen, die zu einer Reduktion der durchschnittlichen Polymerkettenlänge und so zu einer Erhöhung des MVR-Wertes führen. Die Zusammensetzungen in den folgenden Beispielen wurden deshalb angefeuchtet bis ein für alle Proben vergleichbarer Wassergehalt von ca. 0,15 Gew.-% erreicht wurde. Anschließend wurden MVR-Werte mit Vorheizzeiten von 5 und 20 Minuten bei 280 °C mit einer Nennlast von 5 kg gemäß DIN EN ISO 1133 bestimmt. Die Differenz zwischen den MVR-Werten nach 5 und 20 Minuten Vorheizzeit wurde als Maß für den Abbau des Polymers verwendet, je größer die MVR-Differenz desto stärker der unerwünschte Polymerabbau.

**Tabelle 1: Zusammensetzung der verstärkten Formmassen (Angaben in Gew.-%), Entformungskräfte und MVR-Differenzen**

| **Inhaltsstoffe** | **Vergl.-Bsp. 1** | **Vergl.-Bsp. 2** | **Vergl.-Bsp. 3** | **Vergl.-Bsp. 4** | **Vergl.-Bsp. 5** | **Vergl.-Bsp. 6** | **Vergl.-Bsp.7** | **Bsp 1** | **Bsp. 2** | **Bsp. 3** | **Bsp. 4** |
|---|---|---|---|---|---|---|---|---|---|---|---|
| Co-Polyamid | 84,78 | 84,68 | 84,78 | 84,68 | 84,78 | 84,78 | 84,78 | 84,78 | 84,75 | 84,75 | 84,78 |
| Glasfaser | 15 | 15 | 15 | 15 | 15 | 15 | 15 | 15 | 15 | 15 | 15 |
| Talkum | 0,02 | 0,02 | 0,02 | 0,02 | 0,02 | 0,02 | 0,02 | 0,02 | 0,02 | 0,02 | 0,02 |
| Ca-Stearat | 0,2 | 0,3 | | | | | | 0,1 | 0,07 | 0,06 | 0,05 |
| Ethylenbisstearylamid | | | 0,2 | 0,3 | | | 0,08 | 0,05 | 0,05 | 0,17 | 0,05 |
| Glyzerintristearat | | | | | 0,2 | | | 0,05 | 0,06 | | 0,05 |
| Stearylstearat | | | | | | 0,2 | | | | | 0,05 |
| ox. PE-Wachs | | | | | | | 0,12 | | 0,05 | | |
| | | | | | | | | | | | |
| Entformungskraft [N] | 1325 | 1298 | 1554 | 1438 | 1857 | 1524 | 1314 | 1064 | 1032 | 1098 | 1012 |
| MVR-Differenz [cm³/10 min] | 50 | 61 | 29 | 25 | 20 | 21 | 23 | 21 | 32 | 21 | 26 |

**Tabelle 2: Zusammensetzung der unverstärkten Formmassen (Angaben in Gew.-%), Entformungskräfte und MVR-Differenzen.**

| **Inhaltsstoffe** | **Vergleichsbeispiel 8** | **Vergleichsbeispiel 9** | **Beispiel 5** |
|---|---|---|---|
| PA66 | 99,54 | 99,54 | 99,54 |
| Talkum | 0,06 | 0,06 | 0,06 |
| Ca-Stearat | 0,4 | | 0,1 |
| Ethylenbisstearylamid | | 0,4 | 0,1 |
| Glyzerintristearat | | | 0,1 |
| Stearylstearat | | | 0,1 |
| ox. PE-Wachs | | | |
| | | | |
| Entformungskraft [N] | 873 | 895 | 809 |
| MVR-Differenz [cm³/10 min] | 126 | 41 | 74 |

Diese Beispiele zeigen, dass erfindungsgemäße Entformungsmittelkombinationen zu deutlich reduzierten Entformungskräften führen. Ähnliche Reduktionen der Entformungskraft lassen sich mit herkömmlichen Entformungsmitteln selbst bei Konzentrationserhöhungen von 50% nicht realisieren (Vergleichbeispiele 2 und 4). Auch Kombinationen von Entformungsmitteln, die nicht der vorliegenden Erfindung entsprechen, zeigen eine signifikant schlechtere Entformungswirkung (Vergleichsbeispiel 7).

Unter den herkömmlichen Entformungsmitteln in diesen Beispielen zeigt Calcium-Stearat die beste Entformungswirkung. Die Ergebnisse der MVR-Differenz belegen jedoch, dass Calcium-Stearat zu einem deutlichen Abbau der Polymerketten führt (Vergleichsbeispiele 1, 2, 8). Die anderen herkömmlichen Entformungsmittel (Amid- und Ester-Wachse) zeigen bessere Ergebnisse bei der MVR-Differenz und führen nur zu einem geringen Kettenabbau. Dafür ist ihre Entformungswirkung deutlich schlechter (Vergleichsbeispiele 3-7, 9). Die erfindungsgemäßen Entformungsmittelkombinationen zeigen ein durchweg besseres Entformungsverhalten als die einzelnen Entformungsmittel. Gleichzeitig liegen die Werte für die MVR-Differenz auf einem ähnlichen Niveau wie bei den Amid- oder Ester-Wachsen, die keinen deutlichen Kettenabbau hervorrufen.

Die Haftung des Formteils am Werkzeug wird unter anderem durch die Haft- und Gleitreibungskoeffizienten bestimmt. Eine leichte Entformbarkeit korreliert daher mit niedrigen Werten für die Haft- und Gleitreibungskoeffizienten.

Die Haft- und Gleitreibungskoeffizienten wurden bestimmt, indem kreisförmige Prüfteller mit einem Durchmesser von 95 mm mit einem verzahnten Außenring im Spritzguss-Verfahren hergestellt werden. Eine spezielle Konstruktion des Werkzeugs ermöglicht es, die Haft- und Gleitreibungskoeffizienten ohne Entformung des Prüftellers zu messen: Während des Abkühlens des Formteils wird von einer Seite auf den Prüfteller über einen Stempel ein definierter Druck aufgebracht und anschließend das Werkzeug auf dieser Seite geöffnet und der Anguss abgebrochen. Während dieser Vorgänge löst sich das Formteil nicht von der anderen Werkzeugseite. Abschließend wird der Prüfteller über den verzahnten Außenring gedreht und das notwendige Drehmoment aufgezeichnet. Aus diesen Daten werden die Haft- und Gleitreibungskoeffizienten bestimmt. Dieses Verfahren wird in EP1377812 B1 detailliert beschrieben.

**Tabelle 3: Zusammensetzung der verstärkten Formmassen (Angaben in Gew.-%), Haft- und Gleitreibungskoeffizienten**

| **Inhaltsstoffe** | **Vergleichsbeispiel 10** | **Vergleichsbeispiel. 11** | **Beispiel 6** |
|---|---|---|---|
| PA6 | 69,696 | 69,696 | 69,696 |
| Talkum | 0,02 | 0,02 | 0,02 |
| Glasfaser | 30 | 30 | 30 |
| Kupfer(I)-Iodid | 0,04 | 0,04 | 0,04 |
| Kalium-Bromid | 0,1 | 0,1 | 0,1 |
| Ca-Stearat | 0,144 | | 0,036 |
| Ethylenbisstearylamid | | 0,144 | 0,058 |
| Stearylstearat | | | 0,05 |
| | | | |
| Haftreibungskoeffizient | 0,08 | 0,11 | 0,08 |
| Gleitreibungskoeffizient | 0,08 | 0,1 | 0,08 |

**Tabelle 4: Zusammensetzung der unverstärkten Formmassen (Angaben in Gew.-%), Haft- und Gleitreibungskoeffizienten**

| **Inhaltsstoffe** | **Vergleichsbeispiel 12** | **Vergleichsbeispiel 13** | **Beispiel 7** |
|---|---|---|---|
| PA6 | 99,575 | 99,575 | 99,575 |
| Talkum | 0,025 | 0,025 | 0,025 |
| Ca-Stearat | 0,4 | | 0,1 |
| Ethylenbisstearylamid | | 0,4 | 0,16 |
| Stearylstearat | | | 0,14 |
| | | | |
| Haftreibungskoeffizient | 0,73 | 1,39 | 0,61 |
| Gleitreibungskoeffizient | 0,68 | 1,01 | 0,48 |

In den Beispielen für eine verstärkte Polyamid 6-Formmasse (Tabelle 3) liegen die Werte für Haft- und Gleitreibungskoeffizienten bei Verwendung von Calcium-Stearat (Vergleichsbeispiel 10) und einer erfindungsgemäßen Entformungsmittelkombination (Beispiel 6) auf einem ähnlichen Niveau. Die erfindungsgemäßen Entformungsmittelkombinationen haben jedoch den Vorteil, nicht zu einem Abbau der Polymerketten zu führen (s. Vergleichsbeispiele 1, 2 und 8). Die Formmasse mit Amidwachs als Entformungsmittel (Vergleichsbeispiel 11) zeigt erhöhte Werte für die Haft- und Gleitreibung.

In den Beispielen für unverstärkte Polyamid 6-Formmassen (Tabelle 4) zeigt die Formmasse mit der erfindungsgemäßen Entformungsmittelkombination (Beispiel 7) die niedrigsten Werte für die Haft- und Gleitreibungskoeffizienten. Mit Calcium-Stearat (Vergleichbeispiel 12) oder Amidwachs (Vergleichsbeispiel 13) als Entformungsmittel sind diese Werte leicht (Calcium-Stearat) bzw. deutlich (Amidwachs) erhöht.

### Verwendete Materialien:

Co-Polyamid, bestehend aus Polycaprolactam enthaltend ca. 5 % PA66 Einheiten, linear mit einer relativen Lösungsviskosität einer 1%igen Lösung in m-Kresol von 2,9, z. B. Nylon 5011B von Ube
Polyamid 66, linear mit einer relativen Lösungsviskosität einer 1%igen Lösung in m-Kresol von 3,0, z. B. Zytel 101 NC010
Polyamid 6, linear mit einer relativen Lösungsviskosität einer 1%igen Lösung in m-Kresol von 2,9
Kaliumbromid, d₉₉ < 70 µm
Kupfer(I)-Iodid, d₉₉ < 70 µm
Talkum
Calcium-Stearat, z. B. Ceasit AV von Baerlocher GmbH
Ethylenbisstearylamid, z. B. Acrawax C von Lonza Group Ltd.
Glyzerintristearat, z. B. Ligalub GT von Peter Greven GmbH & Co. KG
Stearylstearat, z. B. Ligalub 36 FE von Peter Greven GmbH & Co. KG
oxidiertes Polyethylenwachs, z. B. Licolub H12 von Clariant GmbH

## Patentansprüche

1. Entformungsmittelkombinationen für thermoplastische Kunststoffe enthaltend
A. mindestens ein Amidwachs und
B. mindestens ein Esterwachs und/oder mindestens ein verseiftes Wachs.

2. Entformungsmittelkombinationen gemäß Anspruch 1, **dadurch gekennzeichnet, dass** die Entformungsmittelkombination mindestens ein Amidwachs, mindestens ein Esterwachs und mindestens ein verseiftes Wachs enthält.

3. Entformungsmittelkombinationen entsprechend einem der Ansprüche 1 oder 2, **dadurch gekennzeichnet, dass** die Entformungsmittelkombination mindestens ein Amidwachs enthält, das mittels einer Kondensationsreaktion eines Alkylamins und mindestens einer Carbonsäure mit Kettenlängen von 12 bis 36, bevorzugt mit einer Kettenlänge der Carbonsäure 14 bis 22 Kohlenstoffatome hergestellt werden kann.

4. Entformungsmittelkombination gemäß Anspruch 3, **dadurch gekennzeichnet, dass** eine Carbonsäure der Reihe Laurinsäure, Isotridecansäure, Myristinsäure, Palmitinsäure, Margarinsäure, Stearinsäure, Isostearinsäure, Arachinsäure, Behensäure, Lignocerinsäure, Cerotinsäure, Montansäure, Melissinsäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Nervonsäure, Linolsäure, Linolensäure, Calendulasäure, Punicinsäure, Elaeostearinsäure, Arachidonsäure, Timmodonsäure, Clupanodonsäure, Cervonsäure sowie deren technische Mischungen, bevorzugt eine Carbonsäure der Reihe Margarinsäure, Stearinsäure, Arachinsäure und Behensäure, besonders bevorzugt Stearinsäure eingesetzt wird.

5. Entformungsmittelkombinationen gemäß der Ansprüche 3 bis 4, **dadurch gekennzeichnet, dass** das Alkylamin Ethylendiamin ist.

6. Entformungsmittelkombinationen gemäß der Ansprüche 1 bis 5, **dadurch gekennzeichnet, dass** die Entformungsmittelkombination mindestens ein Esterwachs enthält, das mittels einer Kondensationsreaktion eines Alkohols und mindestens einer Carbonsäure mit Kettenlängen von 12 bis 36 Kohlenstoffatomen hergestellt werden kann.

7. Entformungsmittelkombinationen gemäß Anspruch 6, **dadurch gekennzeichnet, dass** der Alkohol maximal vier Hydroxyl-Gruppen hat.

8. Entformungsmittelkombinationen gemäß einem der Ansprüche 1 bis 7, **dadurch gekennzeichnet, dass** die Entformungsmittelkombination mindestens ein verseiftes Wachs enthält, das eine Verbindung mindestens eines Anions einer Carbonsäure mit einer Kettenlänge von 12 bis 36 Kohlenstoffatomen und einem Kation ist.

9. Entformungsmittelkombinationen gemäß Anspruch 8, **dadurch gekennzeichnet, dass** das Kation ein Kation eines Elements aus der Gruppe umfassend alle Alkali- und Erdalkalimetalle sowie Aluminium und Zink ist.

10. Entformungsmittelkombinationen gemäß Anspruch 9, **dadurch gekennzeichnet, dass** das Kation ein Kation eines Elements aus der Gruppe umfassend Lithium, Natrium, Kalium, Magnesium, Calcium, Barium, Zink und Aluminium ist.

11. Entformungsmittelkombinationen gemäß einem der Ansprüche 8 bis 10, **dadurch gekennzeichnet, dass** die Entformungsmittelkombination ein verseiftes Wachs der Reihe Lithium-Stearat, Natrium-Stearat, Kalium-Stearat, Magnesium-Stearat, Calcium-Stearat, Barium-Stearat, Aluminium-Stearat oder Zink-Stearat enthält.

12. Entformungsmittelkombinationen entsprechend einem der Ansprüche 1 bis 11, **dadurch gekennzeichnet, dass** diese
A. 5 - 70 Gew.-%, bevorzugt 20 - 70 Gew.-%, besonders bevorzugt 30 - 50 Gew.-% mindestens eines Amidwachses,
B. 5 - 70 Gew.-%, bevorzugt 20 - 60 Gew.-%, besonders bevorzugt, 30 - 50 Gew.-% mindestens eines Esterwachses, und/oder
C. 5 - 50 Gew.-%, bevorzugt 10 - 40 Gew.-%, besonders bevorzugt 15 - 35 Gew.-% mindestens eines verseiften Wachses enthalten.

13. Verfahren zur Herstellung von Entformungsmittelkombinationen beinhaltenden thermoplastischen Kunststoffen beinhaltend die Verfahrensschritte:
a) Mischen von mindestens zwei Entformungsmitteln A. und B. und/oder C. zu einer Entformungsmittelkombination gemäß der Ansprüche 1 bis 12 und
b) Zugabe der Entformungsmittelkombination zu den thermoplastischen Kunststoffen.

14. Verfahren entsprechend Anspruch 13, **dadurch gekennzeichnet, dass** die Entformungsmittel vor der Zugabe zu den thermoplastischen Kunststoffen konfektioniert werden.

15. Verfahren entsprechend Anspruch 14, **dadurch gekennzeichnet, dass** die Entformungsmittel vor der Zugabe zu den thermoplastischen Kunststoffen aufgeschmolzen, im geschmolzenen Zustand durchmischt, zur Erstarrung abgekühlt und anschließend konfektioniert werden.

16. Verwendung der Entformungsmittelkombinationen gemäß der Ansprüche 1 bis 12 zum Entformen von thermoplastischen Kunststoffen, bevorzugt von Polyamiden und Polyestern, besonders bevorzugt von Polyamid-basierten oder Copolyamid-basierten Formmassen, ganz besonders bevorzugt von Polyamid 6- oder Polyamid 66- oder Co-Polyamid-basierten Formmassen und Blends.

17. Thermoplastische Formmassen enthaltend Entformungsmittelkombinationen gemäß einem der Ansprüche 1 bis 12.

18. Thermoplastische Formmassen gemäß Anspruch 17, **dadurch gekennzeichnet, dass** als Thermoplast ein Polyester oder Polyamid eingesetzt wird..

19. Thermoplastische Formmassen gemäß Anspruch 18, **dadurch gekennzeichnet, dass** das Polyamid ausgewählt ist aus der Gruppe umfassend Polyamid 6, Polyamid 66, sowie deren Co-Polyamide und Blends.

20. Formteile und Halbzeuge erhältlich durch Extrudieren, Blasformen oder Spritzgießen der thermoplastischen Formmassen gemäß der Ansprüche 17 bis 19.
